# EUROPEAN PATENT APPLICATION

(11) **EP 1 211 887 A2**
(43) Date of publication of application: **05.06.2002**
(21) Application number: 01309731.6
(22) Date of filing: 19.11.2001
(51) Int. Cl.: H04N 5/00, H04N 7/24

(54) **Digital broadcast reception apparatus, reception method, reception program, and computer-readable recording medium**

(30) Priority: 20.11.2000 JP 2000353455
(71) Applicant: MATSUSHITA ELECTRIC INDUSTRIAL CO., LTD., Kadoma-shi, Osaka 571 (JP)
(72) Inventor: Kato, Naoe, Toyota-shi, Aichi-ken 471-0013 (JP)
(74) Representative: Butcher, Ian James

(57) **Abstract**

In a digital broadcast reception apparatus a transport decoder 204 separates a PAT, a PMT, and a DLT to be downloaded, according to data described in a DCT, and writes the PAT, PMT, and DCT to a main RAM 209. A CPU 207 updates the PAT and the PMT so that the DLT can be obtained. The CPU 207 converts the main body of a control program included in the DLT to a bit stream in elementary format, and generates TS packets. The transport decoder 204 notifies a digital I/F 212 of the updated PAT and PMT, and the generated TS packets as a partial TS. The digital I/F 212 outputs the partial TS to a peripheral DVHS deck 214. The DVHS deck 214 records the partial TS on a DVHS tape.

## Description

### BACKGROUND OF THE INVENTION

### 1. Field of the Invention

The present invention relates to a digital broadcast reception apparatus, and in particular to a digital recording/reproduction device that outputs a partial transport stream, and a digital broadcast reception apparatus that receives the partial transport stream.

### 2. Description of the Related Art

Currently, in digital broadcasts which use MPEG (Moving Picture Image Coding Experts Group) transport streams (hereinafter a transport stream is called a "TS") and the like, images, audio, and various other types of data are broadcast.

A new control program for controlling a digital broadcast reception apparatus is one of such types of data. When the digital broadcast reception apparatus downloads such a control program, it accumulates the control program in a volatile RAM (random access memory) temporarily, and then writes the control program to a non-volatile flash ROM (read-only memory).

A digital recording/reproduction device is connected to the digital broadcast reception apparatus to record the digital broadcast audio and images. In order to reproduce the recorded audio and images, the digital broadcast reception apparatus outputs a partial TS based on a received TS to the digital recording/reproduction device.

Here, a partial TS denotes a bit stream obtained by removing one or several specially selected TSs that are not relevant to a program from MPEG2 TS packets.

However, as explained above, conventionally it is possible to output a stream of video, audio and data as described in a PMT (program map table) in compliance with the partial TS standard. However, sections and so on not described in the PMT, such as control programs, which are transmitted in a different format, cannot be output as is because they depart from the partial TS standard. Note that the partial TS standard is described in detail in "CS Digital Broadcast Reception Apparatus Standard (Preferable Specifications)" ARIB STD-B1 Version 1.3, published by Association of Radio Industries and Business.

Furthermore, since data cannot be written to the RAM while a control program accumulated in RAM is being written to the flash ROM, the control program cannot be received during this time. This means that it is necessary to wait for the control program to be transmitted in the next cycle to receive the control program. Thus in order to download the control program in a short amount of time, it is necessary to provide a RAM that is equivalent to the size of the control program.

### SUMMARY OF THE INVENTION

In view of the aforementioned problems, the object of the present invention is to provide a digital broadcast reception apparatus that is capable of outputting, following the partial TS standard, control programs and the like that are transmitted to the digital broadcast reception apparatus in another format.

The aforementioned objective can be achieved by a digital broadcast reception apparatus that has a reception unit for receiving transport streams, outputs a partial transport stream to a recording/reproduction device, and has the recording/reproduction device record the partial transport stream, the reception apparatus including: a first separation unit for separating packets that are not in elementary stream format from a received transport stream; a first generation unit for generating first transport stream packets which are data of the separated packets that has been converted into elementary stream format; a second generation unit for generating second transport stream packets describing information for specifying and separating the first transport stream packets; and an output unit for outputting a partial transport stream which contains the transport stream packets generated by the first generation unit and the second generation unit.

According to the stated construction, data of packets which is not in elementary stream format and therefore cannot be output according to the partial TS standard can be output by being incorporated in a partial transport stream. For example, control programs, font and logo data to be displayed on a screen, and even distributed music data can be incorporated in partial transport streams.

Furthermore, the received transport stream may contain packets in elementary stream format and packets in section format, first section data may be described in section format in the packets that are not in elementary stream format, and information for specifying and separating the first transport stream packets from the partial transport stream in succeeding processing may be described in the second transport stream packets.

According to the stated construction, the first section data described in the first transport stream packets can be used effectively in succeeding processing.

Furthermore, the second generation unit may further include: a second section data generation unit for generating packets of second section data specifying the first transport stream packets; and a third section data generation unit for generating packets of third section data describing separation conditions of the first transport stream packets.

According to the stated construction, the first section data described in the first transport stream packets can be obtained reliably in succeeding processing.

Furthermore, the reception apparatus may further include: a second separation unit for separating packets of fourth section data from the received transport stream, wherein separation conditions of the packets of first section data are described in the fourth section data, and the first separation unit separates the packets of first section data from the received transport stream following the separation conditions.

According to the stated construction, the packets of first section data can be separated.

Furthermore, another received transport stream containing packets of section data on which the second section data is based and packets of section data on which the third section data is based may be specified in the fourth section data, the second separation unit may separate the packets of section data on which the second section data is based and the packets of section data on which the third section data is based, from the other transport stream, and the second and third section data generation units may generate packets of second and third section data, the generated packets of second and third data being based respectively on the separated second and third section data.

According to the stated construction, a digital broadcast apparatus that downloads first section data efficiently can be obtained with effective use of a digital recording/reproduction apparatus.

Furthermore, the first generation unit may descramble the first section data described in the separated second transport stream packets using a key, convert the descrambled data into a bit stream, and generate first elementary stream packets from the bit stream.

According to the stated construction, when first section data is encoded, is possible to incorporate a bit stream that is the result of decoding the first section data in the partial TS.

Furthermore, the first section data separated by the first separation unit may be a DLT (download table) which describes a control program, the second section data separated by the second separation unit is a PAT (program association table) which describes packet identifiers of services provided, the third section data separated by the second separation unit may be a PMT (program map table) which describes which transport stream packets can be obtained, and the fourth section data may be a DCT (download control table) which is transmitted multiplexed in each transport stream.

According to the stated construction, a control program described in a DLT specified by ARIB can be incorporated in a partial TS.

Furthermore, the new second section data generation unit may generate the PAT based on the separated PAT, the separated PAT having had all but one service has been deleted, the third section data generation unit may generate a PMT in which a stream_type describes an identifier of a PES (packetized elementary stream), and a PID (packet identifier) of an ES (elementary stream) describes a PID of a DLT corresponding to the DLT in the DCT, and the output unit may output packets of the generated PAT, the generated PMT, and a first elementary stream of a main body of the descrambled data of the DLT, as partial transport steam packets.

According to the stated construction, the main body of a control program described in a DLT recorded as a partial TS can be separated and obtained during reproduction.

Furthermore, the reception apparatus may further include: a judgement unit for judging whether a DLT separated by the first separation unit is suitable, a suitable DLT being a DLT which fulfills conditions of (a) a maker identifier and a model identifier described therein matching a maker identifier and a model identifier of the reception apparatus, and (b) a version identifier described therein being different to a version identifier currently stored in a non-volatile memory to which the DCT is to be written different; and an instructing unit for instructing, when the separated DLT does not fulfill the conditions, the first separation unit to separate another DLT.

According to the stated construction, a program compatible with the digital broadcast reception apparatus can be incorporated in a partial TS.

Furthermore, the first section data may be an EMM (entitlement management message) describing an automatic display message, the second section data may be a PAT (program association table) describing what kind of services are provided, the third section data may be a PMT (program map table) describing which transport stream packets can be obtained, and the fourth section data may be a CAT (conditional access table) which is transmitted multiplexed with each transport stream.

According to the stated construction, the content of an EMM describing an automatic display message can be incorporated in a partial TS, therefore the automatic display message can be reproduced even when video incorporated in a partial TS is reproduced according to so-called time shift playback.

Furthermore, the present invention may be a digital broadcast reception apparatus that receives a partial transport stream, the partial transport stream containing packets of each of a first elementary stream that has been reproduced by a digital recording/reproduction device, third section data that specifies the first elementary stream, and second section data that specifies the third section data, the reception apparatus including: an obtaining unit for obtaining and interpreting the packets of the second and third section data from the received partial transport stream; a judgement unit for interpreting the obtained packets of third section data, and judging whether a first elementary stream compatible with the reception apparatus is contained in the third section data; a recording unit for obtaining, when the judgement unit judges that a first elementary stream compatible with the reception apparatus is contained in the third section data, the packets of the first elementary stream, and storing the obtained packets of the first elementary stream in a volatile memory; and a transfer unit for reading the packets of the first elementary stream stored in the volatile memory, and transferring the read packets of the first elementary stream to a non-volatile memory.

According to the stated construction, a first elementary stream incorporated in a partial TS can be recorded in the non-volatile memory when necessary.

Furthermore, the reception apparatus may further include: a detection unit for monitoring an amount of the packets of the first elementary stream that have been stored in the volatile memory, and detecting that a storage capacity of the volatile memory has been reached; and a first input control unit for having the recording/reproduction device pause reproduction when the detection unit detects that the storage capacity of the volatile memory has been reached, and having the recording/reproduction device resume reproduction when transferring of the packet of the first elementary stream to the non-volatile memory has finished.

According to the stated construction, a volatile memory with a large capacity is not necessary.

Furthermore, the reception apparatus may further include : a error detection unit for detecting whether there is an error in the packets of the first elementary stream that have been stored in the volatile memory; and a second input control unit for, when the error detection unit judges there to be an error, deleting the content of the volatile memory, and having the recording/reproduction device output the packets of the partial transport stream once more.

According to the stated construction, an error-free elementary stream is stored in the non-volatile memory.

Furthermore, the first elementary stream may be a DLT (download table) that describes a control program, the second section data may be a PAT (program association table) that describes what kind of services are provided, and the third section data may be a PMT (program map table) that describes which transport stream packet can be obtained.

According to the stated construction, a control program that is reproduced can be recorded in the non-volatile memory.

Furthermore, the reception apparatus may further include a table speed control unit for controlling, when the recording/reproduction device is a DVHS (digital video home system), DVHS tape playback speed in response to a data processing ability of the reception apparatus.

According to the stated construction, downloading can be performed at high-speed in response to the ability of the digital broadcast reception apparatus.

Furthermore, the present invention may be a digital broadcast reception apparatus that receives an instruction to download a control program, receives transport streams, separates a DLT (download table) that describes the control program from the received transport streams, and downloads the control program to a non-volatile memory, including: a separating unit for separating, on reception of the instruction, a PAT (program association table) and a PMT (program map table) from the transport stream; a reading unit for reading a control program stored in the non-volatile memory prior to downloading; a first generating unit for generating transport stream packets which are the read control program in elementary stream format; second generating unit for generating a PAT and a PMT based on the separated PAT and the separated PMT respectively for the partial transport stream, so that the transport stream packets describing in the control program can be separated from the partial transport stream; and an output unit for outputting the PAT and the PMT for the partial transport stream and the generated transport packets describing the control program, as a partial transport stream, wherein the reception apparatus has a peripheral digital recording/reproduction device record the output partial transport stream, and the reception apparatus subsequently downloads the control program.

According to the stated construction, backup procedures can be performed even if the non-volatile memory is constructed as one bank.

Furthermore, the object of the present invention can be achieved by a digital broadcast reception method that has a reception step for receiving transport streams, outputs a partial transport stream to a recording/reproduction device, and has the recording/reproduction device record the partial transport stream, the reception method including: a first separation step for separating packets that are not in elementary stream format from a received transport stream; a first generation step for generating first transport stream packets which are data of the separated packets that has been converted into elementary stream format; a second generation step for generating second transport stream packets describing information for specifying and separating the first transport stream packets; and an output step for outputting a partial transport stream which contains the transport stream packets generated by the first generation step and the second generation step..

According to the stated method, data of packets which is not in elementary stream format and therefore cannot be output according to the partial TS standard can be output by being incorporated in a partial transport stream. For example, control programs, font and logo data to be displayed on a screen, and even distributed music data can be incorporated in partial transport streams.

Furthermore, the object of the present invention can be achieved by a digital broadcast reception program that executes on a computer a digital broadcast reception method that has a reception step for receiving transport streams, outputs a partial transport stream to a recording/reproduction device, and has the recording/reproduction device record the partial transport stream, the reception method including: a first separation step for separating packets that are not in elementary stream format from a received transport stream; a first generation step for generating first transport stream packets which are data of the separated packets that has been converted into elementary stream format; a second generation step for generating second transport stream packets describing information for specifying and separating the first transport stream packets; and an output step for outputting a partial transport stream which contains the transport stream packets generated by the first generation step and the second generation step.

By using this program in a digital broadcast reception apparatus, data of packets which is not in elementary stream format and therefore cannot be output according to the partial TS standard can be output by being incorporated in a partial transport stream. For example, control programs, font and logo data to be displayed on a screen, and even distributed music data can be incorporated in a partial transport stream.

Furthermore, the object of the present invention can be achieved by a computer-readable recording medium for use with a digital broadcast reception apparatus that has a reception unit for receiving transport streams, outputs a partial transport stream to a recording/reproduction device, and has the recording/reproduction device record the partial transport stream, the recording medium characterized by having recorded thereon a program including: a first separation step for separating packets that are not in elementary stream format from a received transport stream; a first generation step for generating first transport stream packets which are data of the separated packets that has been converted into elementary stream format; a second generation step for generating second transport stream packets describing information for specifying and separating the first transport stream packets; and an output step for outputting a partial transport stream which contains the transport stream packets generated by the first generation step and the second generation step.

By using this recording medium in a digital broadcast reception apparatus, data of packets which is not in elementary stream format and therefore cannot be output according to the partial TS standard can be output by being incorporated in a partial transport stream. For example, control programs, font and logo data to be displayed on a screen, and even distributed music data can be incorporated in a partial transport stream.

### BRIEF DESCRIPTION OF THE DRAWINGS

These and other objects, advantages and features of the invention will become apparent from the following description thereof taken in conjunction with the accompanying drawings which illustrate a specific embodiment of the invention. In the drawings:
Fig. 1 is a schematic drawing for explaining an outline of the digital broadcast reception apparatus of the present invention receiving a transport stream;
Fig. 2 is a structural drawing of a first embodiment of the digital broadcast reception apparatus of the present invention;
Fig. 3 shows the data structure of a DCT separated by the transport decoder in the first embodiment;
Fig. 4 shows the data structure of a PAT separated by the transport decoder in the first embodiment;
Fig. 5 shows the data structure of a PMT separated by the transport decoder in the first embodiment;
Fig. 6 shows the data structure of a DLT separated by the transport decoder in the first embodiment;
Fig. 7 shows a specific example of a PAT updated by the CPU in the first embodiment;
Fig. 8 shows a specific example of a PMT updated by the CPU in the first embodiment;
Fig. 9 is a flowchart for explaining operations in the first embodiment;
Fig. 10 is a flowchart for explaining operations in a second embodiment of the digital broadcast reception apparatus of the present invention;
Fig. 11 is a schematic drawing for explaining partial TSs in the recording phase in the first embodiment and the reproduction phase in the second embodiment; and
Fig. 12 is a flowchart for explaining operations in a third embodiment of the digital broadcast reception apparatus of the present invention.

### DESCRIPTION OF THE PREFERRED EMBODIMENTS

The following describes an embodiment of the digital broadcast reception apparatus of the present invention with reference to the drawings.

### First Embodiment

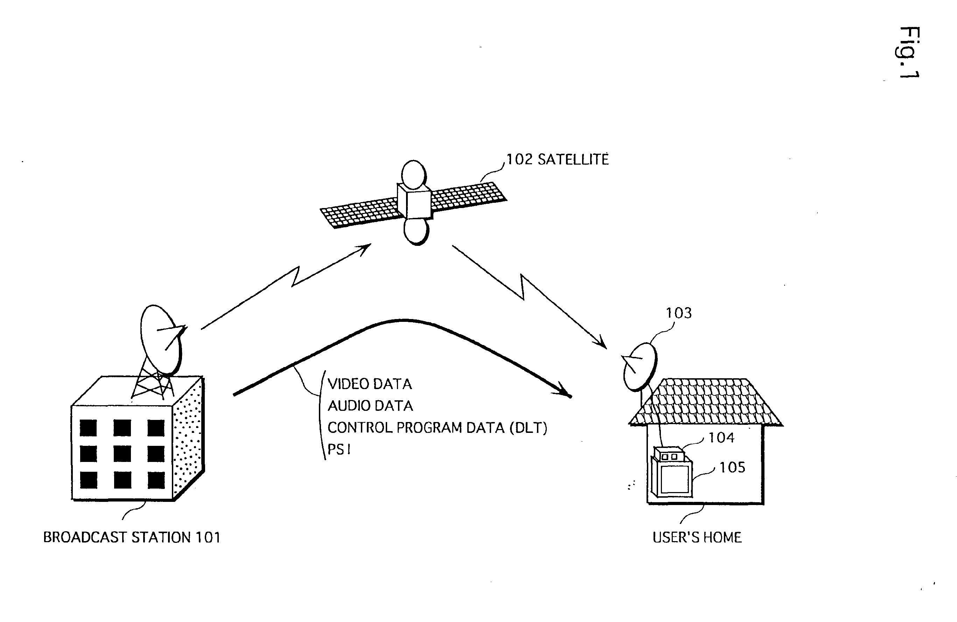

Fig. 1 is a schematic drawing for explaining an outline of the digital broadcast reception apparatus of the present invention receiving transport streams.

Transport streams are broadcast from a broadcast station 101, received by an antenna 103 on a user's home via a satellite 102, and are input into the digital broadcast reception apparatus (hereinafter "reception apparatus") 104. Each of the transport streams is made up of multiplexed video data, 'audio data, a DLT (Download Table) in which a control program is recorded, PSI (Program Specific Information), and so on of a program.. Video data and audio data that have been extracted from one of the received transport streams are output by a monitor 105.

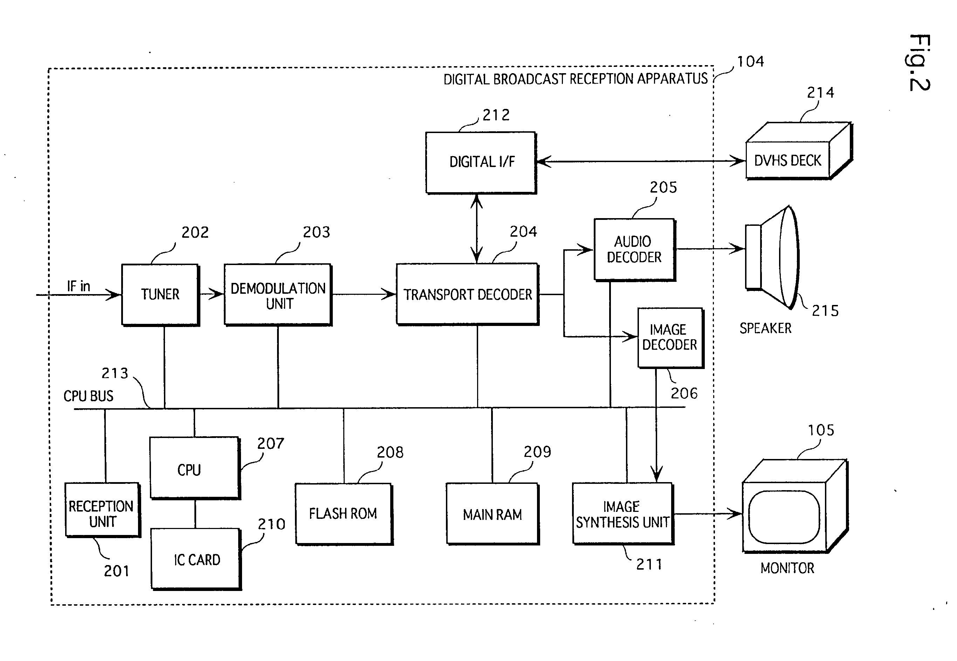

Fig. 2 shows the structure of the reception apparatus of the first embodiment of the present invention.

The reception apparatus 104 is composed of a reception unit 201, a tuner 202, a demodulation unit 203, a transport decoder 204, an audio decoder 205, an image decoder 206, a CPU (central processing unit) 207, a flash ROM 208, a main RAM 209, an IC (integrated circuit) card 210, a screen synthesis unit 211, a digital I/F (interface) 212. Each of the units are connected by a CPU bus 213 as shown in the drawing.

The digital I/F 212 is connected to a peripheral digital recording/reproduction device, for example a DVHS (digital video home system) deck 214.

The audio decoder 205 is connected to a peripheral speaker 215.

The image synthesizing unit 211 is connected to a peripheral monitor 105.

Note that the example used in the present embodiment is one in which the control program is multiplexed in TSs transmitted from the satellite 102, received by the reception apparatus 104, and recorded on a DVHS tape in by the DVHD deck 214.

Accordingly, an explanation of how a program is shown by the reception apparatus receiving an ordinary program, the transport decoder 204 decoding image data and audio data, the image data being displayed on the monitor 105 via the image decoder 206, and the audio data being output by the speaker 215 is be omitted since it does not directly concern the present application.

The reception unit 201 receives an input of a signal according to an operation of a remote control (not illustrated) from the user, and notifies the CPU 207. The user sees a display screen on the monitor 105 showing that a control program can be downloaded, and operates the remote control to instruct a download. The reception unit 201 receives a download instruction signal from the remote control and notifies the CPU 207 of the download instruction.

The tuner 202 receives an input of the modulated wave of the TSs received by the antenna 103, and outputs the modulated wave to the demodulation unit 203.

The demodulation unit 203 demodulates the modulated wave and outputs the multiplexed TSs to the transport decoder 204.

When the PID of the DCT has been set by the CPU 207, the transport decoder 204 extracts the DCT, writes the DCT to the main RAM 209, and notifies the CPU 207.

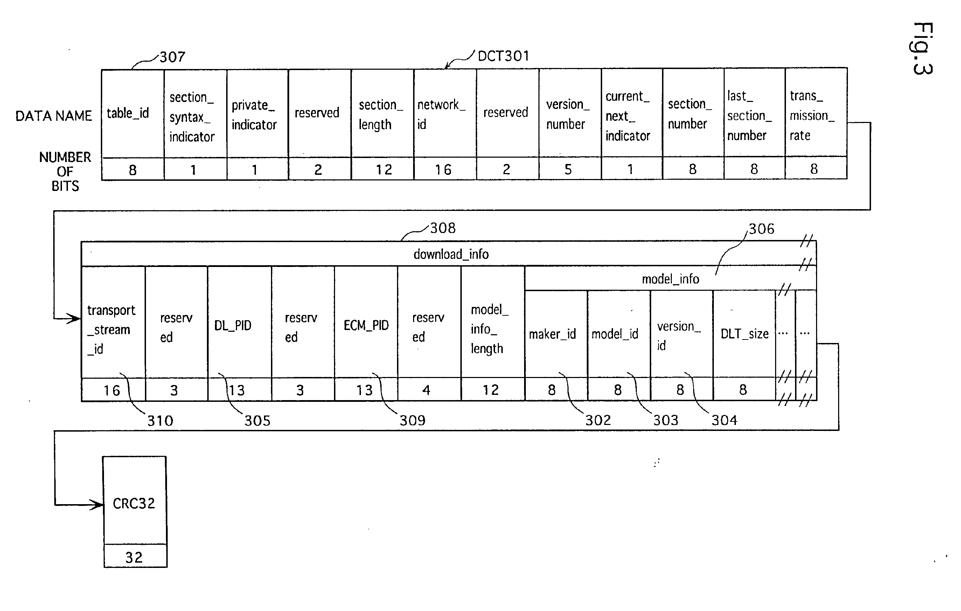

Fig. 3 shows the data structure of a DCT. A DCT 301 is identified by a table_id 307, and information for obtaining a DLT is described therein as download_info 308.

The DLT describes a control program for the reception apparatus 104. A maker_id 302 and a model_id 303 for digital broadcast reception apparatuses to which the control program applies are described in the download_info 308. The reception apparatus 104 judges according to the maker_id 302 and the model_id 303 whether a compatible control program is shown in the DLT. In addition, the version of the control program is described by the version_id 304. This does not have to be identical to any version of a control program already written to the flash ROM 208, and in fact it is pointless to obtain a DLT unless the version is different to any already written to the flash ROM 208.

A DL_PID 305 in the DCT 301 shows the PID of the DLT. An ECM_PID 309 shows the PID of an ECM (Entitlement Control Message) corresponding to the DLT. The ECM is a table for transmitting common information composed of a key for descrambling and so on.

When a PID of a PAT (Program Association Table) has been set in the transport decoder 204 by the CPU 207, the transport decoder 204 separates and writes the PAT to the main RAM 209, and notifies the CPU 207.

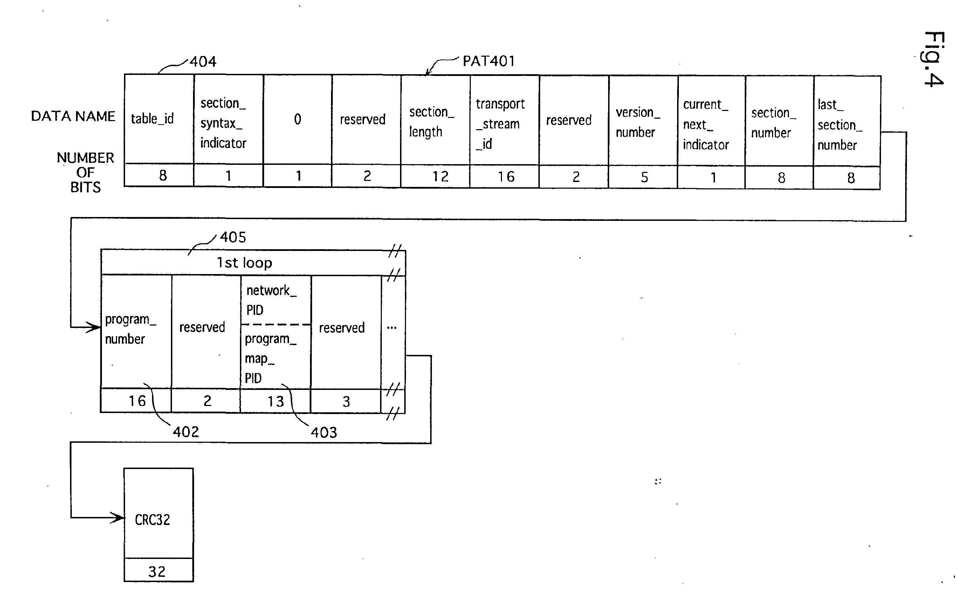

Fig. 4 shows the data structure of a PAT. A PAT 401 is identified by a table_id 404, and describes what kind of services are provided. Note that in the PAT 401 program_number 402 and program_map_PID 403 are described in a 1st loop 405. The PID of the PMT is determined from the program_number 402 and the program_map_PID 403.

When the CPU 207 has set a PID of a PMT (Program Map Table) in the transport decoder 204, the transport decoder 204 separates and writes the PMT to the main RAM 209, and notifies the CPU 207.

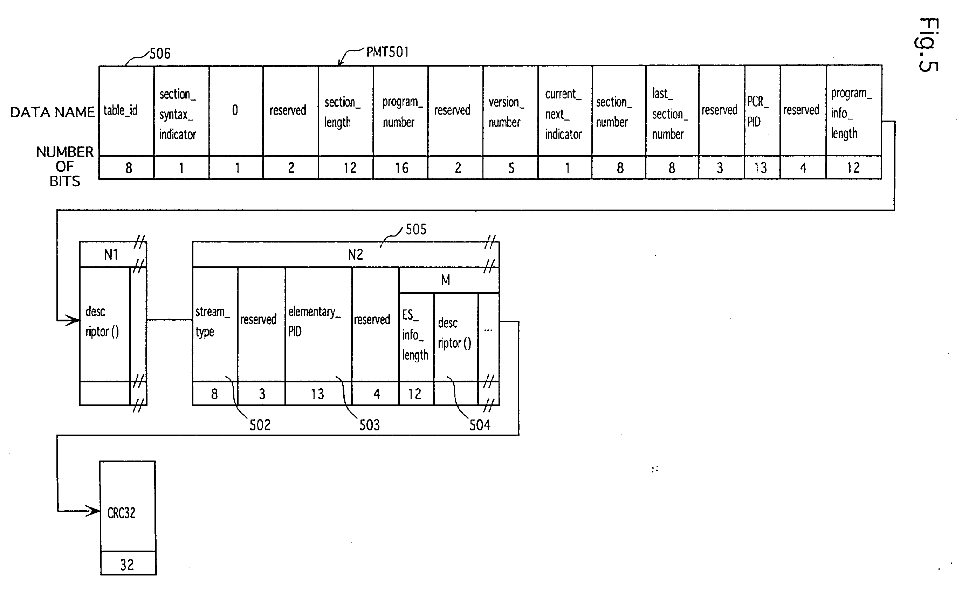

Fig. 5 shows the data structure of a PMT. A PMT 501 is identified by a table_id 506, and describes which TS packets are obtainable. A stream_type 502, an elementary_PID 503, and a descriptor() 504 are described in a second loop 505 in the PMT 501. The CPU 207 rewrites this content so that the TS packet of the DLT can be extracted.

When the PID of the ECM has been set by the CPU 207 in the transport decoder 204, the transport decoder 204 separates the ECM, and notifies the CPU 207. In response the transport decoder 204 receives notification of the DLT scramble key from the CPU 207.

When the PID of the DLT has been set by the CPU 207 in the transport decoder 204, the transport decoder 204 separates the DLT, descrambles the DLT using the scramble key and writes the DLT to the main RAM 209, and notifies the CPU 207.

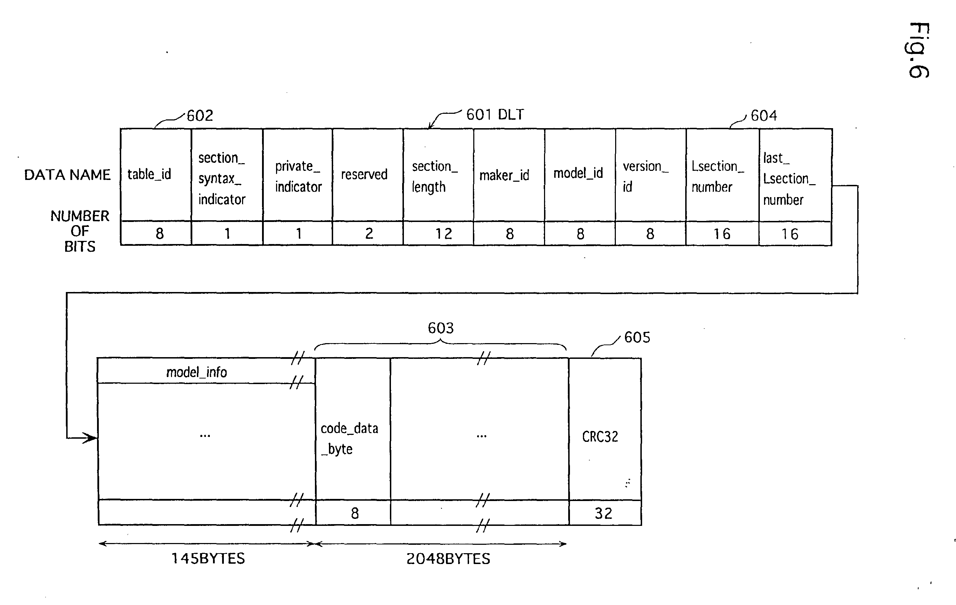

Fig. 6 shows the data structure of a descrambled DLT. A DLT 601 is identified by a table_id 602. The DLT 601 is composed of an area in which a main body of a control program shown by a code_data_byte 603 is described, and an area in which other header information is described. The header information includes an Lsection_number 604 in which section numbers are specified. Furthermore, the value of the CRC (Cyclic Redundancy Check) of all the sections of the DLT 601 overall is described in a CRC 605.

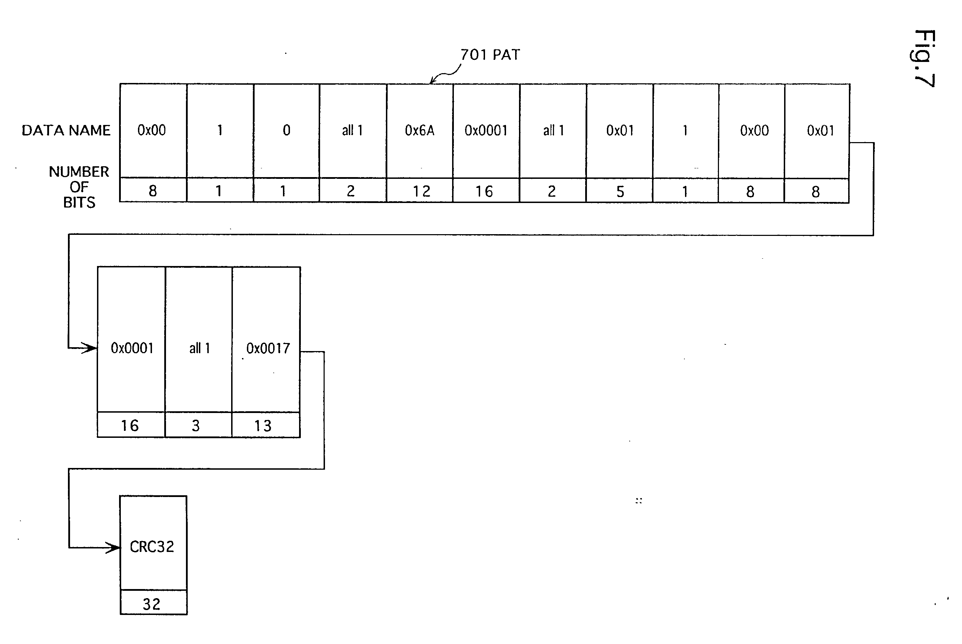

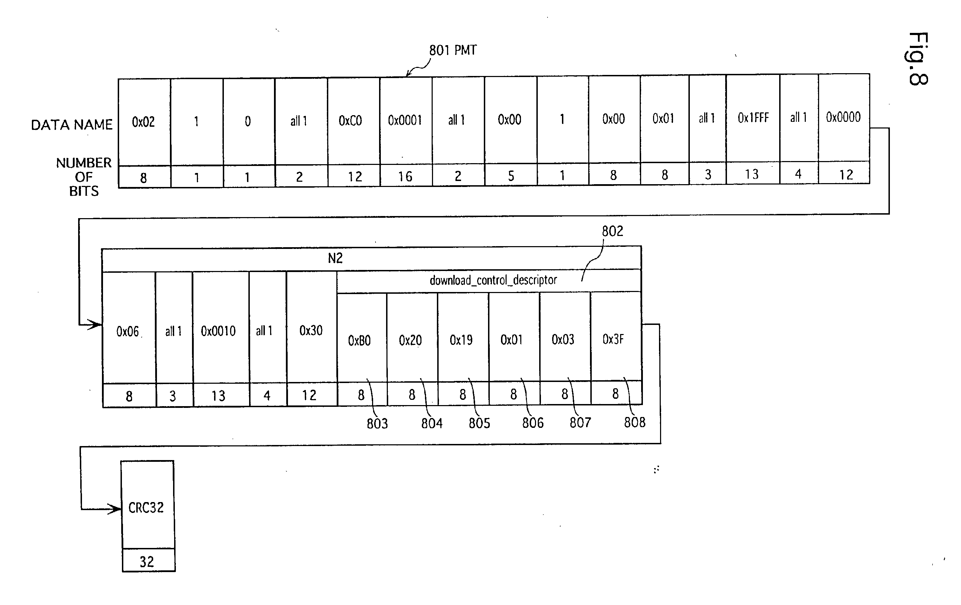

After the transport decoder 204 has been informed by the CPU 207 of an updated PAT 701 (see Fig. 7), an updated PMT 801 (see Fig. 8), and TS packets into which the main body of the program in the DLT 601 has been converted, it informs the digital I/F 212.

On receiving a control program download instruction from the reception unit 201, the CPU 207 sets the PID of the DCT to "0x0017" in the transport decoder 204, and instructs the separation of the DCT. On being notified by the transport decoder 204 that the DCT 301 has been separated, the CPU 207 judges whether the maker_id 302 and the model_id 303 described in the DCT 301 match those of the reception apparatus 104 and the version_id is different to that of a DLT stored in the flash ROM 208. When the judgement is affirmative, the CPU 207 instructs the transport decoder 204 to separate a PAT in the frequency band corresponding to the transport_stream_id 310 described in the DCT 301, and sets the PID of the PAT to "0x0000". When the judgement is negative, the CPU 207 gives the transport decoder 204 a DCT separation instruction once more.

On receiving notification from the transport decoder 204 that the PAT 401 has been extracted, the CPU 207 deletes all but one services (channel) described in the PAT 401, and notifies the transport decoder 204 of the resulting PAT, for example such as that in Fig. 7. In addition, the CPU 207 reads the program_number 402 and the program_map_PID 403 and sets the PID of the PMD in the transport decoder 204.

On receiving notification from the transport decoder 204 that the PMT 501 has been separated, the CPU 207 records "0x06" to the stream_type 502 described in the PMT 501, and records the DL_PID 305 of the DCT 301 in the elementary_PID 502 described in the PMT 501. Furthermore, the CPU 207 records the download_control_descriptor in the descriptor() 504 in the PMT 501.

Fig. 8 shows a specific example of a PMT updated by the CPU 207. In the PMT 801 a download_control_descriptor 802 contains a descriptor_tag 803, a descriptor_length 804, a maker_id 805, a model_id 806, a version_id 807, and a DLT_size 808. The maker_id 805, model_id 806, version_id 807, and DLT_size 808 are the content described in the model_info 306 described in the DCT 301. The CPU 207 notifies the transport decoder of the updated PMT 801.

CPU 207 sets the PID of the ECM in the transport decoder 204. On receiving notification that the ECM has been separated, the CPU 207 checks contract information and the like recorded on the IC card 210, and if the check succeeds, obtains the DLT scramble key and notifies the transport decoder 204 of the scramble key.

Next, the CPU 207 sets the DL_PID in the transport decoder 204, and instructs the separation of the DLT 601. On receiving notification from the transport decoder 204 that the DLT 601 has been separated, the CPU 207 extracts the code_data_byte 602 section from the DLT 601 and the Lsection_number 604 from amongst the header sections in the DLT 601. Furthermore, the CPU 207 re-calculates the CRC, generates TS packets using an elementary screen which excludes the other header sections, and notifies the transport decoder 204.

The flash ROM 208 is a non-volatile memory in which a control program for the reception apparatus 104 is recorded. A version_id is described in the control program. The CPU 207 judges whether the version_id in the DCT 301 separated by the transport decoder 204 is the same as this version_id.

The DLT 601 whose version_id is different and which is compatible with the reception apparatus 104 is output temporarily to the DVHS deck 214 as a partial TS, and recorded on a DVHS tape. As is explained later in the second embodiment, the partial TS is written to the flash ROM 208 as the DVHS tape is played.

The main RAM 209 is a volatile memory to which section data of the PAT 401 and the like separated by the transport decoder 204 are written.

Contract information and the like are recorded on the IC card 210. The CPU 207 checks this information against the ECM, and when the check is successful reads the scramble key.

The image synthesizing unit 211 synthesizes image signals output by the image decoder 206 with service information, and displays the result on the monitor 105. Service information showing that the DLT can be downloaded is displayed on the monitor 105.

The digital I/F 212 outputs the PAT 701 and the PMT 801 which are notified by the transport decoder 204, and the TS packets of the DLT to the DVHS deck 214 as a partial TS.

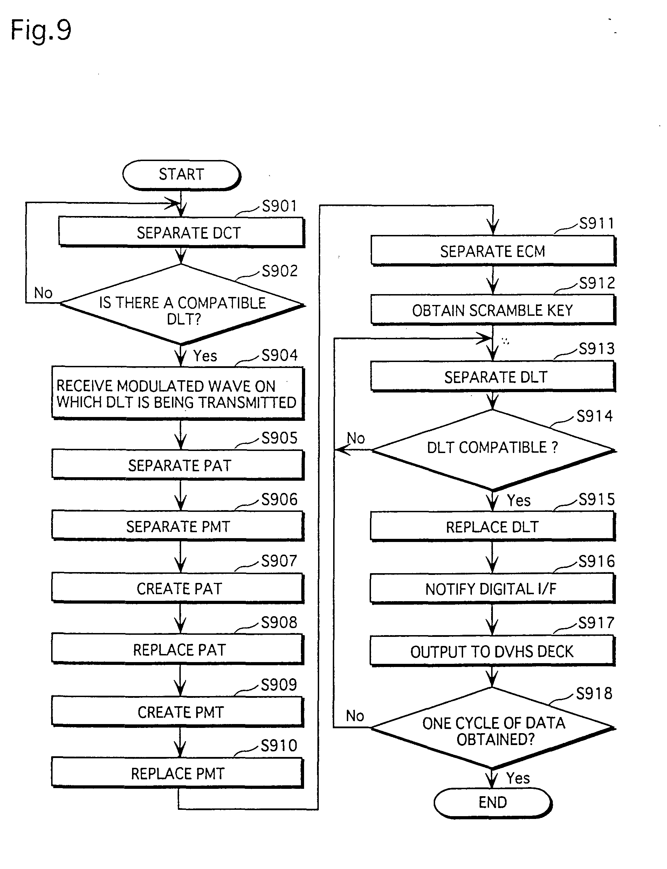

Next, the flowchart in Fig. 9 is used to explain the operations of the present embodiment.

First, on receiving a control program download instruction from the user, the transport decoder 204 separates the DCT 301 from the TS (S901).

The CPU 207 judges whether the DLT 601 which is compatible with the reception apparatus 104 is described in the separated DCT 301 (S902). When the judgement is negative, the CPU 201 returns to S901. When the judgement is positive the tuner 202 receives the modulated waves on which the DLT 601 is transmitted (S904).

The transport decoder 204 separates the PAT 401 (S905).

The transport decoder 204 separates the PMT 501 (S906).

The CPU 207 removes the information for all services but one from the separated PAT 401 to create the PAT 701 (S907). The transport decoder 204 replaces the separated PAT 401 with the created PAT 701 (S908).

Next, the CPU 207 rewrites the content of the separated PMT 501 to create a new PMT 801 so that the DLT 601 TS packet can be separated from the partial TS. In detail, the CPU 207 rewrites the stream_type to "0x06" which shows PES Packets (S909). The transport decoder 204 replaces the separated PMT 501 with the new PMT 801.

Next, the CPU 207 sets the value of the ECM_PID 309 of the DCT 301 in the transport decoder 204, and the transport decoder 204 separates the ECM (S911).

The CPU 207 checks the separated ECM with the contract information written in the IC card 210, obtains the scramble key, and notifies the transport decoder 204 of the scramble key (S912).

The CPU 207 sets the PID in the DLT 601 in the transport decoder 204, and the transport decoder 204 separates the DLT 601 (S913).

The CPU 207 reconfirms whether the separated DLT 601 is compatible with the reception apparatus 104 (S914). When they are not compatible the CPU 207 returns to S913. When they are compatible the CPU 207 creates a TS packet using an ES of the Lsection_number 604, the code_data_byte 602, and the CRC 605 of the DLT 601, and replaces the separated DLT 601 with the created TS packet (S915).

Next, the transport decoder 204 notifies the digital I/F 212 of the PAT 701 and the PMT 801 together with the TS packet created using the DLT 601 (S916).

The digital I/F 212 outputs a partial TS to the DVHS deck 214 (S917). The DVHS deck 214 records the partial TS to the DVHS tape.

The CPU 207 has S913 through to S917 repeated until one cycle of the DLT 601 is obtained (S918), and then ends the processing.

Note that in the present embodiment the DVHS deck 214 is connected to the digital I/F 212 of the reception apparatus 104, but instead the DVHS deck 214 may be built into the reception apparatus 104.

Furthermore, in the present embodiment the DVHS deck 214 records to a DVHS tape, but a digital recording device such as an AVHDD may be recorded to instead.

Furthermore, information such as the number of times a broadcast may be reproduced and information to show that copying is not permitted may be included in the recorded data of the PMT.

Recording of download data to a DVHS tape is made possible in the manner described above. Since new download data is progressively recorded, it is unnecessary to provide a large flash ROM in the reception apparatus 104.

Note that the present embodiment gives an example in which a DLT which describes a control program, the control program being in section format, is incorporated in a partial TS and output, but as another example, music data in file format for music distribution may be incorporated and output in a partial TS.

Furthermore, in the same way, an EMM (Entitlement Management Message) which describes an automatic display message in section format may be incorporated and output in the partial TS. In such a case, in order to obtain the PID of the EMM, a CAT (Conditional Access Table) is first separated, instead of the DCT, from the TS. By including the EMM in the partial TS, the automatic display message can be displayed in, for example, so-called time shift playback.

Note that the EMM is described in "BS Digital Broadcasting Limited Reception Method Standard", ARIB STD-B25, version 1.0. The CAT is described in "Standard for Program Arrangement Information for Use in Digital Broadcasting", ARIB STD-B10, version 1.3.

Furthermore, the DCT and DLT explained in the present embodiment are described in "CS Digital Broadcasting Standard Common Use Receiver Standard" ARIB STD-B16, version 1.1. The PAT and PMT are described in "Program Arrangement Information for Use in Digital Broadcasting", ARIB STD-B10, version 1.3.

### Second Embodiment

The structure in the second embodiment is substantially the same as that in the first embodiment, therefore the structural drawing in Fig. 2 is used in the explanation. However, a peripheral control unit (not illustrated) is provided connected to the reception apparatus 104. The peripheral control unit is also connected to the DVHS deck 214.

In the present embodiment, the reception apparatus 104 receives an input of the partial TS that is recorded on the DVHS tape by the DVHS 214 in the first embodiment, and records the control program to the flash ROM 208.

Note that an explanation of the components that are identical to those of the first embodiment is omitted, and an explanation is given only for the components unique to the present embodiment.

The reception unit 201 receives a download signal according to an operation of the remote control by the user, and gives the CPU 207 a download start instruction.

The transport decoder 204, as in the first embodiment, separates the PAT 701 and the PMT 801 from the partial TS notified by the digital I/F 212 following the control of the CPU 207, and writes the PAT 701 and the PMT 801 to the main RAM 209. Furthermore, the transport decoder 204 separates the TS packets described in the control program (download data) of the code_data_byte 603 in the DLT 601, and writes the control program to the main RAM 209.

On receiving notification from the reception unit 201 of a download start instruction, the CPU 207 notifies the peripheral control unit to give the DVHS deck 214 a DVHS reproduction start instruction.

Furthermore, the CPU 207 refers to the download_control_descriptor 802 in the separated PMT 801 to judge whether the control program to be downloaded to the flash ROM 208 is TS packets of a partial TS.

The CPU 207 judges whether there are any data errors in the control program described in the code_data_byte 603 in the DLT 601, by referring to the CRC 605. When the CPU 207 detects a data error it notifies the peripheral control unit of the error detection.

Furthermore, the CPU 207 monitors the main RAM 209 and judges whether the main RAM 209 is full (i.e. whether there are no longer any areas that have not been recorded to) with the control program being written by the transport decoder 204. When the RAM 209 is full, the CPU 207 notifies the peripheral control unit and transfers the control program to the flash ROM 208. The CPU 207 notifies the peripheral control unit when the transfer is complete.

Furthermore, when all of the control program (download data) has been written to the main RAM 209, the CPU 207 transfers the control program in the main RAM 209 to the flash ROM 208.

The digital I/F 212 receives an input of the partial TS being reproduced from the DVHS deck 214, and notifies the transport decoder 204.

The CPU 207 gives a reproduction start instruction to the peripheral control unit which gives the instruction to the DVHS deck 214.

On receiving notification from the CPU 207 that the main RAM 209 is full, the peripheral control unit instructs the DVHS deck 214 to pause playback. Furthermore, on receiving notification that the transfer has ended, the peripheral control unit instructs the DVHS deck to resume inputting the partial TS by resuming playback.

On receiving notification of error detection from the CPU 207, the peripheral control unit instructs the DVHS deck 214 to rewind the DVHS tape and to input the partial TS once more.

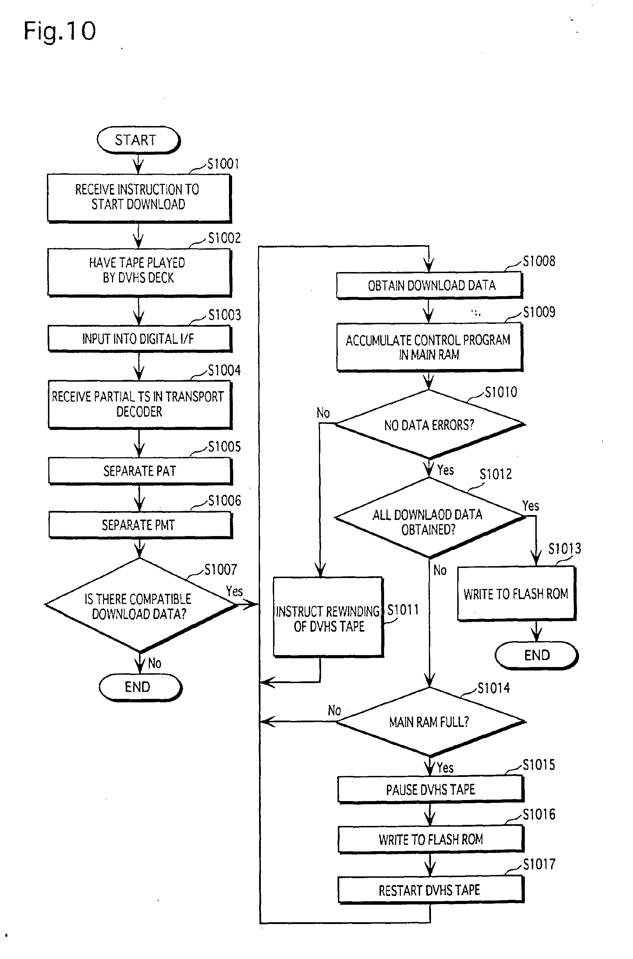

Next, the operations of the present embodiment are explained with use of the flowchart show in Fig. 10.

First, when the reception unit 201 has received a download instruction from the user, the CPU 207 instructs the peripheral control unit to start downloading (S1001).

The peripheral control unit instructs the DVHS deck 214 to commence playback of the DVHS tape (S1002).

The digital I/F 212 receives an input of a partial TS from the DVHS deck 214 (step S1003).

The transport decoder 204 separates the PAT 701 and writes the PAT 701 to the main RAM 209 (S1005). The transport decoder 204 separates the PMT 801 and writes the PMT 801 to the main RAM 209 (S1006).

The CPU 207 judges, using the content of the download_control_descriptor 802 in the PMT 801, whether there is download data compatible with the partial TS (S1007). When the judgement is negative the process ends.

When the judgement is positive, the transport decoder 204 separates and obtains the partial TS from the download data (S1008), and accumulates the control program in the main RAM 209 (S1009).

The CPU 207 detects whether there are any data errors in the control program that has been stored in the main RAM 209 (S1010). When the CPU 207 detects an error it notifies the peripheral control unit. The peripheral control unit instructs the DVHS deck to rewind the DVHS tape (S1011), and the process returns to S1008.

When the CPU 207 does not detect a data error, it judges whether all of the download data has been stored in the main RAM 209 (S1012). When the judgement is positive, the CPU 207 transfers the content of the main RAM 209 to the flash ROM 208 (S1013), and the process ends. When the CPU 207 judges that not all of the download data has been stored in the main RAM 209, it judges whether the main RAM 209 is full (S1014). When the main RAM 209 is not full the process returns to S1008, and when the main RAM 209 is full, the CPU 207 informs the peripheral control unit.

The peripheral control unit instructs the DVHS deck 214 to pause the DVHS tape (S1015).

The CPU 207 transfers the content of the download data stored in the main RAM 209 to the flash ROM 208 (S1016).

The peripheral control unit receives notification from the CPU 207 that the transfer of the download data to the flash ROM 208 has ended, and instructs the DVHS to resume the playback of the DVHS tape (S1017). The process returns to S1008.

In this way, downloading is made possible by playing the DVHS tape on which the partial TS has been recorded. In the present embodiment an example is given where the partial TS is output by the digital broadcast reception apparatus as explained in the first embodiment, and the DVHS deck plays a tape that was recorded by the DVHS deck, however is also possible to download from a distributed prerecorded DVHS tape.

Note that a structure in which the peripheral control unit detects the recording speed of the transport decoder to the main RAM 209 and instructs the DVHS deck to vary the playback speed of the DVHS tape according to the recording speed is possible. This structure achieves high-speed downloading.

Furthermore, in the present embodiment the explanation involves recording a partial TS to a DVHS tape, but it is possible to record the partial TS to a removable recording medium such as a CD-R (Compact Disk Recordable) .

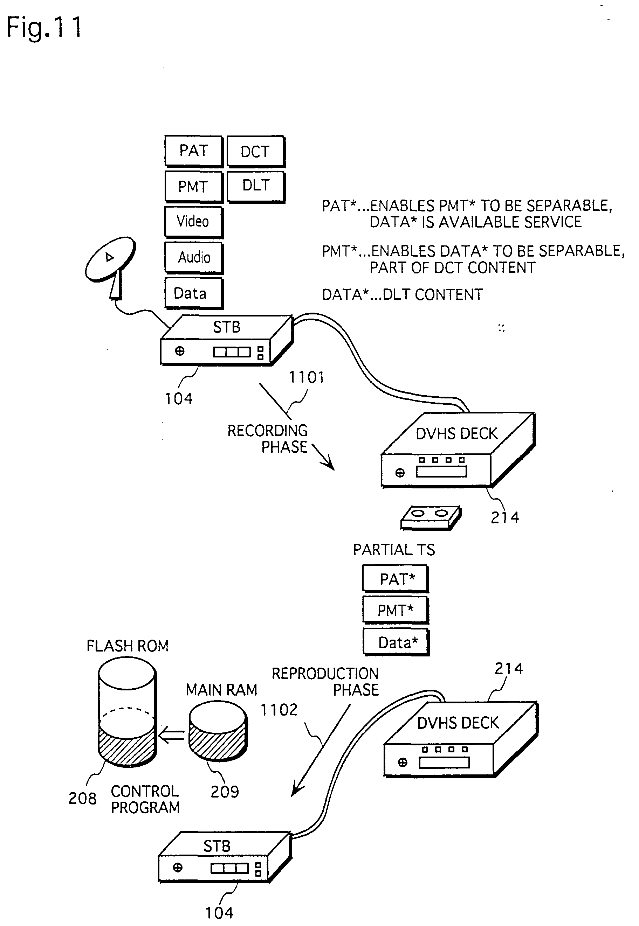

The following describes the recording phase of the partial TS to the DVHS deck and the reproduction phase of the first and second embodiments once more with use of the schematic drawing in Fig. 11.

First, in the recording phase 1101 the reception apparatus (STB) 104 receives TS packets of each of a DCT, a PAT, a PMT, a DLT, Video, Audio, and Data that are transmitted multiplexed. The CPU 207 of the reception apparatus 104, in order to incorporate the control program in the partial TS, generates a Data* TS packet in elementary stream format using the DLT described in the control program. The Data* TS packet is the new DLT in which the main body of the control program is described. So that the Data* TS packet can be obtained as the new DLT when the Data* TS packet reproduced, a new PAT* and a new PMT* are generated respectively from the PAT and the PTM.

The reception apparatus 104 outputs the TS packets of the PAT*, the PMT*, and the Data* to the DVHS deck 214 as a partial TS.

The DVHS deck 214 records the input partial TS on the DVHS tape.

Next, in the reproduction phase 1102 the partial TS recorded on the DVHS tape is reproduced by the DVHS deck 214, and the TS packets of the PAT*, the PMT*, and the Data* are output to the reception apparatus 104.

In the reception apparatus 104, the partial TS output by the DVHS deck 214 is input into the transport decoder 204 via the digital I/F 212. The transport decoder 204 descrambles the PAT* and the PMT*, and writes the descrambled PAT* and PMT* to the main RAM 209.

The CPU 207 judges from the PAT* and the PMT* recorded in the main RAM 209 whether there is Data* compatible with the reception apparatus 104. When the judgement is positive the CPU 207 instructs the transport decoder 204 to separate the Data*. The transport decoder 204 writes the Data* to the main RAM 209. The CPU 207 checks whether there is an error in the Data* that has been written to the main RAM 209. When there is an error, the partial TS is reproduced once more by the DVHS deck 214. When there is no error, the CPU 207 transfers the Data* that has been written to the main RAM 209 to the flash ROM 208. Note that the Data* written to the flash ROM 208 is the control program of the DLT. Here, when the main RAM 208 is full, the peripheral control unit instructs the DVHS deck 214 to pause reproduction. Then, the peripheral control unit waits for the Data* to be transferred to the flash ROM 208, and instructs the DVHS deck 214 to resume reproduction.

In this way, the reception apparatus 104 incorporates a DLT, which is in section format and not accepted in the ARIB standard, in a partial TS as Data* in elementary stream format, and records the partial TS on a DVHS tape temporarily. The reception apparatus 104 downloads the control program described in the DLT as the DVHS deck 214 plays the DVHS tape.

Accordingly, it is not necessary to provide a large main RAM 209. Furthermore, inconveniences in not being able to obtain the DLT when transferring from the main RAM 209 to the flash ROM 208 are solved. As a result, a complete control program can be obtained quickly.

### Third Embodiment

Next, the structural drawing in Fig. 2 is further used to explain a third embodiment of the present invention.

In the present embodiment, before a new control program is written to the flash ROM 208, the control program currently stored in the flash ROM 208 (hereinafter "current control program") is output incorporated in TS packets of a partial TS, and recorded on a DVHS tape in the peripheral DVHS deck 214, performing a back up procedure.

Note that the only differences between the present embodiment and the first embodiment are (a) when the CPU 207 creates the PMT, it includes a download_control_descriptor in the PMT so that the control program stored in the flash RAM 208 can be 'separated and obtained from the partial TS, and (b) the control program that is incorporated and output in a partial TS is not a newly separated DLT, but is a DLT read from the flash ROM 208 by the CPU 207. Accordingly, an explanation of each component is omitted.

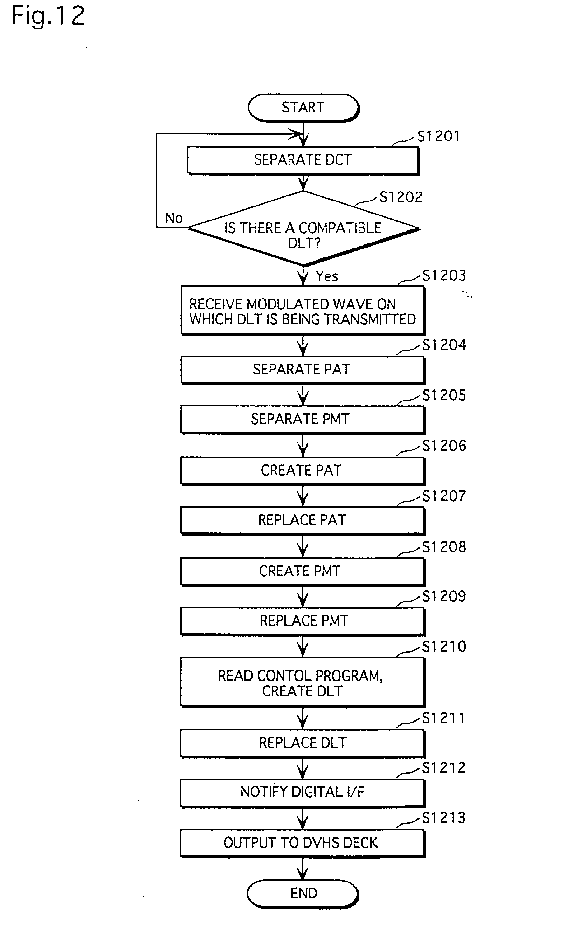

Next, the operations of the present embodiment are explained using the flowchart in Fig. 12.

First, the transport decoder 204, on receiving a download instruction for a new control program from the user, separates the DCT 301 from the TS, and writes the DCT 301 to the main RAM 209 (step 1201).

The CPU 207 judges whether the DLT 601 which is compatible with the reception apparatus 104 is described in the DCT 301 (S1202), and when the judgement is negative, the process returns to S1201. When the judgement is positive, the tuner 202 receives the modulated wave on which the DLT 601 is being transmitted (S1203).

The transport decoder 204 separates the PAT 401 from the TS, writes the PAT 401 to the main RAM 209 (S1204), separates the PMT 501 from the TS, and writes the PMT 501 to the main RAM 209 (S1205).

The CPU 207 deletes all but one service from the separated PAT 401 and uses that service to create a PAT 701 (S1206).

The transport decoder 204 replaces the separated PAT 401 with the created PAT 701 (step S1207).

The CPU 207 creates a PMT corresponding to the service described in the PAT 701. Here, the CPU sets stream_type to "0x06" (PES packets), and gives the elementary_PID an arbitrary value. The maker_id and the model_id of the reception apparatus are described in the download_control_descriptor, and the version_id of the current control program is described in the version_id (S1208).

The transport decoder 204 replaces the separated PMT 501 with the created PMT (S1209).

Next, the CPU 207 reads the control program stored in the flash ROM 208 to create TS packets of the DLT. Here, only the main body of the control program, the Lsection_number, and the CRC are incorporated in the TS packets (S1210).

The transport decoder 204 notifies the digital I/F of the new PAT, PMT, and DLT (S1212). Note that other TS packets are deleted.

The digital I/F 212 outputs the notified DLT and so on, as a partial TS to the DVHS deck 214 (S1213). The DVHS deck 214 records the output partial TS on the DVHS tape. This completes the backup process.

Next, in the reception apparatus, a newly separated DLT is written to the main RAM 209 in a conventional manner, and then transferred to the ROM 208.

Here, when there are failures in writing to the flash ROM 208, or when the user wishes to return to a former control program, the backup DVHS tape is played in the DVHS deck 214 and downloaded to restore the original state.

According to the stated construction, even if the main ROM for storing the control program is provided as one bank, downloading with little chance of failure is possible.

Furthermore, the present invention is particularly effective for backing up CA (Conditional Access) system programs which differ between service providers.

Note that in the embodiments the present invention is shown by the structure in Fig. 2, but the present invention may be realized by a program which executes the functions of each component on a computer. Furthermore, the same effect can be realized by the program being recorded on a computer-readable recording medium, and applying the recording medium to a digital broadcast reception apparatus which does not have a function of incorporating and outputting a control program in a partial TS.

Although the present invention has been fully described by way of examples with reference to accompanying drawings, it is to be noted that various changes and modifications will be apparent to those skilled in the art. Therefore, unless such changes and modifications depart from the scope of the present invention, they should be construed as being included therein.

## Claims

1. A digital broadcast reception apparatus that has a reception unit for receiving transport streams, outputs a partial transport stream to a recording/reproduction device, and has the recording/reproduction device record the partial transport stream, the reception apparatus **characterized by** comprising:
first separation means for separating packets that are not in elementary stream format from a received transport stream;
first generation means for generating first transport stream packets which are data of the separated packets that has been converted into elementary stream format;
second generation means for generating second transport stream packets describing information for specifying and separating the first transport stream packets; and
output means for outputting a partial transport stream which contains the transport stream packets generated by the first generation means and the second generation means.

2. The reception apparatus of Claim 1
wherein the received transport stream contains packets in elementary stream format and packets in section format,
first section data is described in section format in the packets that are not in elementary stream format, and
information for specifying and separating the first transport stream packets from the partial transport stream in succeeding processing is described in the second transport stream packets.

3. The reception apparatus of Claim 2
wherein the second generation means further includes:
a second section data generation unit for generating packets of second section data specifying the first transport stream packets; and
a third section data generation unit for generating packets of third section data describing separation conditions of the first transport stream packets.

4. The reception apparatus of Claim 3, further comprising:
second separation means for separating packets of fourth section data from the received transport stream,
wherein separation conditions of the packets of first section data are described in the fourth section data, and
the first separation means separates the packets of first section data from the received transport stream following the separation conditions.

5. The reception apparatus of Claim 4
wherein another received transport stream containing packets of section data on which the second section data is based and packets of section data on which the third section data is based is specified in the fourth section data,
the second separation means separates the packets of section data on which the second section data is based and the packets of section data on which the third section data is based, from the other transport stream, and
the second and third section data generation units generate packets of second and third section data, the generated packets of second and third data being based respectively on the separated second and third section data.

6. The reception apparatus of Claim 5
wherein the first generation means descrambles the first section data described in the separated second transport stream packets using a key, converts the descrambled data into a bit stream, and generates first elementary stream packets from the bit stream.

7. The reception apparatus of Claim 6
wherein the first section data separated by the first separation means is a DLT (download table) which describes a control program, the second section data separated by the second separation means is a PAT (program association table) which describes packet identifiers of services provided, the third section data separated by the second separation means is a PMT (program map table) which describes which transport stream packets can be obtained, and the fourth section data is a DCT (download control table) which is transmitted multiplexed in each transport stream.

8. The reception apparatus of Claim 7
wherein the second section data generation unit generates a PAT in which information for at least one service is described,
the third section data generation unit generates a PMT in which a stream_type describes an identifier of a PES (packetized elementary stream), and a PID (packet. identifier) of an ES (elementary stream) describes a PID of a DLT corresponding to the DLT in the DCT, and
the output means outputs packets of the generated PAT, the generated PMT, and a first elementary stream of a main body of the descrambled data of the DLT, as partial transport steam packets.

9. The reception apparatus of Claim 8, further comprising:
judgement means for judging whether a DLT separated by the first separation means is suitable, a suitable DLT being a DLT which fulfills conditions of (a) a maker identifier and a model identifier described therein matching a maker identifier and a model identifier of the reception apparatus, and (b) a version identifier described therein being different to a version identifier currently stored in a non-volatile memory to which the DCT is to be written different; and
instructing means for instructing, when the separated DLT does not fulfill the conditions, the first separation means to separate another DLT.

10. The reception apparatus of Claim 5
wherein the first section data is an EMM (entitlement management message) describing an automatic display message, the second section data is a PAT (program access table) describing what kind of services are provided, the third section data is a PMT (program map table) describing which transport stream packets can be obtained, and the fourth section data is a CAT (conditional access table) which is transmitted multiplexed with each transport stream.

11. A digital broadcast reception apparatus that receives a partial transport stream, the partial transport stream containing packets of each of a first elementary stream that has been reproduced by a digital recording/reproduction device, third section data that specifies the first elementary stream, and second section data that specifies the third section data, the reception apparatus **characterized by** comprising:
obtaining means for obtaining and interpreting the packets of the second and third section data from the received partial transport stream;
judgement means for interpreting the obtained packets of third section data, and judging whether a first elementary stream compatible with the reception apparatus is contained in the third section data;
recording means for obtaining, when the judgement means judges that a first elementary stream compatible with the reception apparatus is contained in the third section data, the packets of the first elementary stream, and storing the obtained packets of the first elementary stream in a volatile memory; and
transfer means for reading the packets of the first elementary stream stored in the volatile memory, and transferring the read packets of the first elementary stream to a non-volatile memory.

12. The reception apparatus of Claim 11, further comprising:
detection means for monitoring an amount of the packets of the first elementary stream that have been stored in the volatile memory, and detecting that a storage capacity of the volatile memory has been reached; and
first input control means for having the recording/reproduction device pause reproduction when the detection means detects that the storage capacity of the volatile memory has been reached, and having the recording/reproduction device resume reproduction when transferring of the packet of the first elementary stream to the non-volatile memory has finished.

13. The reception apparatus of Claim 11, further comprising:
error detection means for detecting whether there is an error in the packets of the first elementary stream that have been stored in the volatile memory; and
second input control means for, when the error detection means judges there to be an error, deleting the content of the volatile memory, and having the recording/reproduction device output the packets of the partial transport stream once more.

14. The reception apparatus of Claim 11, 12, or 13
wherein the first elementary stream is a DLT (download table) that describes a control program, the second section data is a PAT (program association table) that describes what kind of services are provided, and the third section data is a PMT (program map table) that describes which transport stream packet can be obtained.

15. The reception apparatus of Claim 14 further comprising:
table speed control means for controlling, when the recording/reproduction device is a DVHS (digital video home system), DVHS tape playback speed in response to a data processing ability of the reception apparatus.

16. A digital broadcast reception apparatus that receives an instruction to download a control program, receives transport streams, separates a DLT (download table) that describes the control program from the received transport streams, and downloads the control program to a non-volatile memory, **characterized by** comprising:
separating means for separating, on reception of the instruction, a PAT (program association table) and a PMT (program map table) from the transport stream;
reading means for reading a control program stored in the non-volatile memory prior to downloading;
first generating means for generating transport stream packets which are the read control program in elementary stream format;
second generating means for generating a PAT and a PMT based on the separated PAT and the separated PMT respectively for the partial transport stream, so that the transport stream packets describing in the control program can be separated from the partial transport stream; and
output means for outputting the PAT and the PMT for the partial transport stream and the generated transport packets describing the control program, as a partial transport stream,
wherein the reception apparatus has a peripheral digital recording/reproduction device record the output partial transport stream, and the reception apparatus subsequently downloads the control program.

17. A digital broadcast reception method that has a reception step for receiving transport streams, outputs a partial transport stream to a recording/reproduction device, and has the recording/reproduction device record the partial transport stream, the reception method **characterized by** comprising:
a first separation step for separating packets that are not in elementary stream format from a received transport stream;
a first generation step for generating first transport stream packets which are data of the separated packets that has been converted into elementary stream format;
a second generation step for generating second transport stream packets describing information for specifying and separating the first transport stream packets; and
an output step for outputting a partial transport stream which contains the transport stream packets generated by the first generation step and the second generation step.

18. A digital broadcast reception program that executes on a computer a digital broadcast reception method that has a reception step for receiving transport streams, outputs a partial transport stream to a recording/reproduction device, and has the recording/reproduction device record the partial transport stream, the reception method **characterized by** comprising:
a first separation step for separating packets that are not in elementary stream format from a received transport stream;
a first generation step for generating first transport stream packets which are data of the separated packets that has been converted into elementary stream format;
a second generation step for generating second transport stream packets describing information for specifying and separating the first transport stream packets; and
an output step for outputting a partial transport stream which contains the transport stream packets generated by the first generation step and the second generation step.

19. A computer-readable recording medium for use with a digital broadcast reception apparatus that has a reception unit for receiving transport streams, outputs a partial transport stream to a recording/reproduction device, and has the recording/reproduction device record the partial transport stream, the recording medium **characterized by** having recorded thereon a program comprising:
a first separation step for separating packets that are not in elementary stream format from a received transport stream;
a first generation step for generating first transport stream packets which are data of the separated packets that has been converted into elementary stream format;
a second generation step for generating second transport stream packets describing information for specifying and separating the first transport stream packets; and an output step for outputting a partial transport stream which contains the transport stream packets generated by the first generation step and the second generation step.
